# EUROPEAN PATENT APPLICATION

(11) **EP 1 575 276 A1**
(43) Date of publication of application: **14.09.2005**
(21) Application number: 05101750.7
(22) Date of filing: 07.03.2005
(51) Int. Cl.: H04N 5/225, G03B 19/07, G03B 17/02

(54) **Camcorder**

(30) Priority: 10.03.2004 KR 2004016085
(71) Applicant: SAMSUNG ELECTRONICS CO., LTD., Gyeonggi-do 442-742 (KR)
(72) Inventor: Park, Cheul-hae, Yeongtong-gu Suwon-si Gyeonggi-do (KR); Park, Chan-seob, Yeongtong-gu Suwon-si Gyeonggi-do (KR)
(74) Representative: Geary, Stuart Lloyd

(57) **Abstract**

An image photographing apparatus such as a camcorder has an improved structure for opening and closing a housing door of a deck unit. A tape cassette is mounted to the deck unit from the front to the rear side of the apparatus, and substantially vertically with respect to the deck unit. Accordingly, compact-sized image photographing apparatus can be provided.

## Description

The present invention relates to a camcorder comprising a tape deck and a tape deck door.

Recently, portable imaging apparatuses have become widely used, mainly due to their convenience. Portable imaging apparatuses are used in a variety of circumstances, including hobby and leisure activities. Thanks to advancements in digital technology, digital cameras and camcorders are now rapidly replacing analogue ones.

Generally, a camcorder combines the functions of a tape recorder and a camera. Camcorders are able to record, reproduce and edit image information, as desired by the operator. Camcorder can be divided into two categories, hand held types and shoulder types. The shoulder-type camcorders are expensive and are generally for professional use. The hand held-type camcorders are compact and light-weight, and are wide spread, especially for personal use.

Hand held camcorders can also be divided into two categories, shooting and vertical, according to their shapes. Shooting-type camcorders resemble guns in that the length is greater than the height. In contrast, vertical-type camcorders are taller than they are long.

In a typical conventional hand-held camcorder, a deck unit (not shown) is mounted inside an outer casing of the camcorder body 120, in which a camera unit 110 is integrally formed. The exterior structure is arranged such that a housing door 140 can be opened and closed, irrespective of the type of the model, in a vertical direction about a horizontal axis for the loading and unloading tape cassettes (not shown) into/out of the deck unit (not shown).

Accordingly, a variety of associated equipment structures are required for the realization of the opening and closing structure of the housing door mentioned above, and, therefore, space, especially in a lateral direction, is necessary. As a result, realization of compact products in the future is limited. Moreover, another drawaback is that when the housing door is opened and closed in the downward direction, the cassette tape may tilt downward during the operation of the product, and therefore, stability is affected.

A camcorder, according to the present invention, is characterised in that the tape deck door is hinged so a to swing forwards for opening, enabling a tape cassette to be inserted from behind. The term "front" should be taken to mean that part of the camcorder that is directed towards a subject being captured. Thus, an objective lens is to be found at a front position and an eyepiece will often be found at a rear position.

Preferably, the axis of rotation of the tape deck door for opening is substantially perpendicular to the main, front to rear axis of the camcorder.

Preferably, the tape deck includes a head drum towards one side and the tape deck is positioned such that the head drum side of the tape deck is towards the front of the camcorder.

An embodiment of the present invention will now be described, by way of example, with reference to the accompanying drawings, in which:

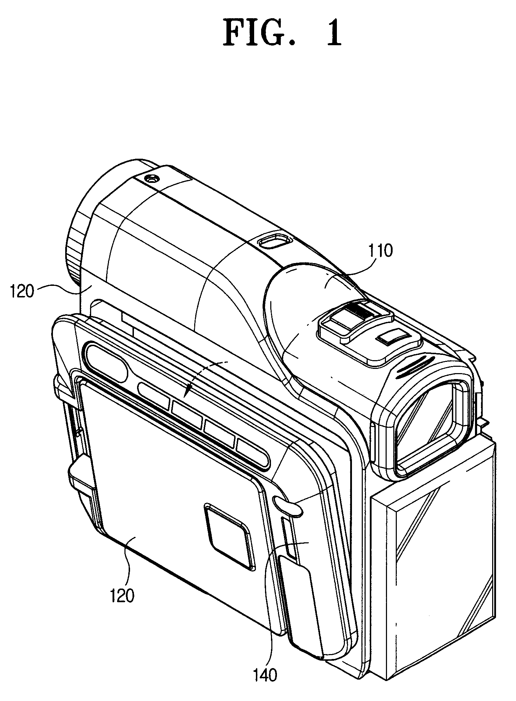

Figure 1 is a perspective view of a typical conventional camcorder;
Figure 2 is a plan view illustrating the outer structure of a camcorder according to the present invention; and
Figure 3 is a perspective view of a housing door of the camcorder of Figure 2.

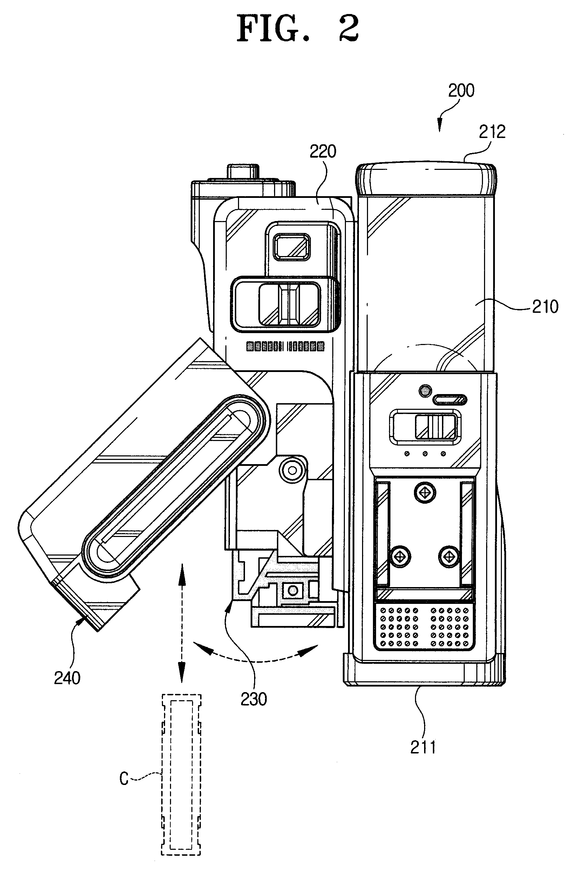

The description of well-known functions will be omitted for conciseness. Referring to Figure 2, an camcorder 200, according to the present invention, comprises a body 220, having a deck unit 230 for a recording medium, such as a magnetic tape, for the recording and reproduction of image information of an object captured by a camera unit 210, having a PCB (printed circuit board) mounted therein. A housing door 240 movably engaged to one side of the body 220 to hinge open and closed for loading and unloading of a tape cassette (C).

In the camcorder 200 as described above, the housing door 240 is opens towards the front of the body 220. The tape cassette (C) is loaded towards the ocular lens 212 end of the body from objective lens 211 end of the body. The tape cassette (C) is ejected toward the end of the body 220 having the objective lens 211 from the ocular lens 212 end of the body.

The deck unit 230, although not illustrated in drawings in detail, is mounted in a substantially vertical direction so that a head drum is located near the ocular lens 212. For example, the head drum is arranged to face an upper or lower portion of the deck unit 230. The hingedly connected housing door 240 rotates between open and closed positions about a vertical axis. In such a general camcorder 200, the deck unit 230 generally has a horizontal arrangement. However, in the present embodiment, the deck unit 230 is formed approximately at 90° left or right from the horizontal axis of of the product.

Accordingly, a tape cassette, arranged in a vertical relation with respect to the body 220, is loaded and unloaded through the front of the deck unit 230 through the housing door 240.

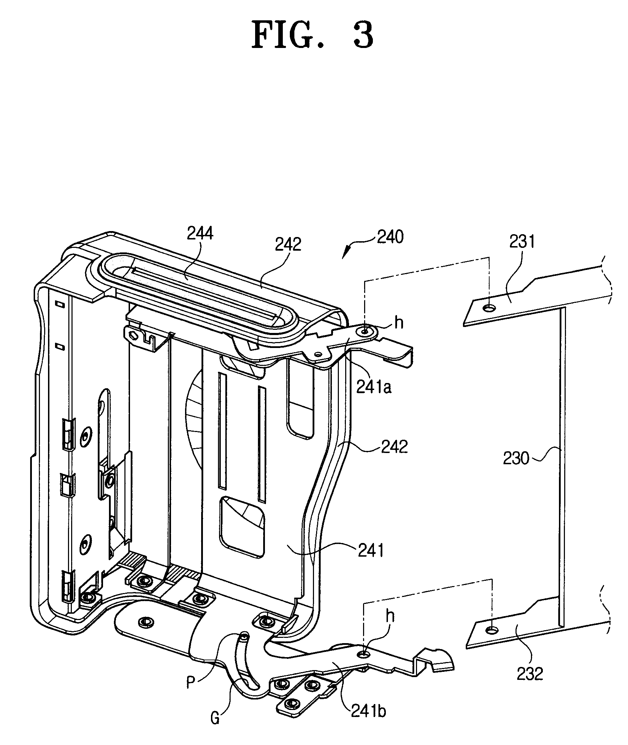

Referring to Figure 3, the housing door 240 comprises a housing frame 241, preferably formed of metal frames by moulding. The housing door 240 engages with the deck unit 230 for hingedly rotating. A door frame 242, preferably formed by injection molding, is joined to the housing frame 241 by a plurality of screws (S) covering the housing frame 241, thus forming a part of the exterior of the outer casing of the body 220.

The housing frame 241 comprises a pair of links 241 a, 241b. The pair of links 241 a, 241b engage a pair of hinge frames 231, 232 protruding from opposite sides of the deck unit 230, forming a hinge structure (h). The reference character G denotes a guide slot for restricting the hinge movement of the housing frame 241 and the door frame 242, and the reference character P denotes a guide pin engaged in the guide slot (G). A window 244 is also provided.

With the camcorder forward-opening housing door structure described above, a tape cassette is loaded and unloaded with respect to the deck unit 230 through the forwardly openable housing door, along a plane substantially orthogonal with respect to the deck unit 230. As a result, the overall lateral length of the product is reduced and a compact camcorder having a unique exterior structure is provided.

As described above, the improved structure for opening and closing a housing door with respect to the deck unit allows a cassette of image recording medium to be loaded and unloaded with respect to the deck unit from the front to the rear side of the camcorder, at a substantially orthogonal position with respect to a plane of the deck unit. Consequently, the size of the exterior structure, especially the lateral length of the image photographing apparatus can be reduced, and a compact image photographing apparatus is provided, which is convenient to use and adjust.

## Claims

1. A camcorder comprising a tape deck and a tape deck door (240), **characterised in that** the tape deck door (240) is hinged so a to swing forwards for opening, enabling a tape cassette (C) to be inserted from behind.

2. A camcorder according to claim 1, including an objective lens (211) at a front position and an eyepiece (212) at a rear position.

3. A camcorder according to claim 1 or 2, wherein the axis of rotation of the tape deck door (240) for opening is substantially perpendicular to the main, front to rear axis of the camcorder.

4. A camcorder according to claim 1, 2 or 3, wherein the tape deck includes a head drum towards one side and the tape deck is positioned such that the head drum side of the tape deck is towards the front of the camcorder.

5. An image photographing apparatus, comprising:
a body having a deck unit for recording/reproducing of image information inputted through a camera unit, and a printed circuit board mounted therein; the body being configured to have an ocular lens mounted on one end thereof, and an objective lens mounted on the other end thereof, and
a housing door movably mounted on a side of the body to allow loading and unloading of a tape cassette with respect to the deck unit, wherein the housing door is hingedly opened and closed proximate the front side of the body,
the tape cassette is loaded from the objective lens end toward an ocular lens end of the body, and upon being mounted in the deck unit, the tape cassette is ejected from the ocular lens end toward the objective lens end of the body.

6. The image photographing apparatus of claim 5, wherein the tape cassette is forwardly loaded in the deck unit, and substantially vertically with respect to the body.

7. The image photographing apparatus of claim 5, wherein the deck is unit is oriented substantially vertical so that a head drum is located near the ocular lens end of the camera unit.

8. The image photographing apparatus of claim 5, wherein
the housing door further comprises a plurality of links for engaging a plurality of apertures disposed on a hinge frame of the deck unit for connecting the housing door to the deck unit.

9. The image photographing apparatus of claim 8, wherein
the housing door further comprises a door frame and a housing frame.

10. The image photographing apparatus of claim 8, wherein
the housing door has a guide opening , and a guide pin engageable with the guide opening for limiting movement of the housing frame.

11. The image photographing apparatus of claim 8, wherein
the housing door has a guide opening, and a guide pin egangeable with the guide opening for limiting movement of the door frame.
